# EUROPEAN PATENT SPECIFICATION

(11) **EP 3 947 231 B1**
(45) Date of publication and mention of the grant of the patent: **04.10.2023**
(21) Application number: 20710541.2
(22) Date of filing: 17.03.2020
(51) Int. Cl.: B66B 1/34, B66B 5/00, H04L 67/12, H04L 12/66, H04L 43/08

(54) **METHOD AND SYSTEM FOR COMMISSIONING OF A COMMUNICATION GATEWAY**
VERFAHREN UND SYSTEM ZUR INBETRIEBNAHME EINES KOMMUNIKATIONSGATEWAYS
PROCÉDÉ ET SYSTÈME POUR LA MISE EN SERVICE D'UNE PASSERELLE DE COMMUNICATION

(30) Priority: 28.03.2019 EP 19165928
(43) Date of publication of application: 09.02.2022
(73) Proprietor: INVENTIO AG, 6052 Hergiswil (CH)
(72) Inventor: LÜSCHER, Matthias, 6006 Luzern (CH); TSCHUPPERT, Reto, 6015 Luzern (CH)
(74) Representative: Inventio AG
(86) International application number: PCT/EP2020/057246
(87) International publication number: WO 2020/193280

(56) References cited:
- EP-A1- 2 693 691
- EP-A1- 3 480 751
- US-A1- 2010 290 351
- US-A1- 2016 264 377

## Description

The present invention refers to a method according to claim 1 and a system according to claim 11 for commissioning a communication gateway with a portable device in a transportation system. The present invention further refers to a communication gateway of a transportation system according to claim 13 and a computer program product according to claim 14.

Transportation systems, in particular, elevator systems and escalator systems have become indispensable for transportation of human beings and/or loads from the ground to higher floors in buildings. This becomes even more relevant due to the fact that new buildings getting higher and higher. The transportation systems are highly complex systems commonly including technical components, which have to meet certain aspects, in particular, security-critical aspects in order to be approved for operation. One security aspect in a transportation system is the communication connection between the transportation system itself and further control instances.

In the state-of-the-art, transportation systems are equipped with technical components providing a language communication or data communication over a wired connected device from the transportation system to further control instances. This wired connection, for instance, a public switched phone network, cannot meet the requirements of the latest communication technology, such as digital communication and controlling of the transportation system and/or access to mobile network services while transportation. Therefore, the current used wired devices have to be decommissioned and replaced by communication gateways meeting the requirements as stated above.

The process of decommissioning and, in particular, the commissioning of a new communication gateway is quite a time consuming and error-prone. In state-of-the-art, communication gateways may be configured by using the short message service (SMS) for sending commissioning commands and commissioning data. This has the limitation that the commission process and the state of the commission process cannot be monitored and controlled by a fitter. In case of an error, the fitter has to perform a cumbersome and time-consuming analysis to find the error or has to repeat the entire commission process. Moreover, a configuration via short message service has the disadvantage that it can happen that a message will not be delivered correctly, so that the commission process is doomed to fail or not delivered at the right time or delayed, so that the installation process is not predictably extended. Furthermore, the short message sent for commissioning a communication gateway can be compromised by an attacker.

A further limitation of a prior art commissioning process is the missing automatic registration of the communication gateway in the control instance after commissioning the communication gateway in the transportation system. This has to be done manually and therefore increases the effort for the entire commissioning process. US 2016/264377 A1 discloses a method and a system for establishing communication between a remote centre and an external device through a gateway according to the preamble of claims 1 and 11, while EP 2 693 691 A1 discloses a method for bootstrapping a gateway according to the state of the art.

Accordingly, it is an object of the present invention to solve or at least reduce these problems and limitations of the prior art, and, in particular, provide a method for commissioning a communication gateway that is more efficient and can be monitored. A further object is to provide a secure system for commissioning a communication gateway.

This object is achieved with the subject matter according to the independent claims with the claimed features. Advantageous embodiments are the subject matter of the dependent claims, the description and the figures.

According to a first aspect, the present invention refers to a method according to claim 1 for commissioning a communication gateway with a portable device in a transportation system. The method comprising the following steps:
Establishing a first communication connection from the portable device to the communication gateway of the transportation system;
Transmitting configuration data from the portable device to the communication gateway of the transportation system using the established communication connection;
Establishing a second communication connection from the communication gateway to a server unit using the configuration data, and

According to the transmitted configuration data, initiating a communication gateway software deployment being received from the server unit by using the established first communication connection for commissioning the communication gateway in the transportation system.

In connection with the present invention, a "communication gateway" can be understood to mean, for instance, a component, in particular a data communication hardware device that provides a remote network with connectivity to a host network. A communication gateway provides a communication connection to a remote network or an autonomous system that is out of bounds for host network nodes. A communication gateway serves as the entry and exit point of a network; all data routed inward or outward must first pass through and communicate with the gateway in order to use routing paths. For instance, a router may be configured to work as a gateway device in computer networks. The communication gateway may be providing connection services for connecting wireless with mobile networks and mobile devices. The communication gateway by be connected to all current existing mobile communication standards and technologies and can be updated for use with upcoming standards and technologies.

The invention is based on the idea to solve problems with state-of-the-art commissioning processes for communication gateways in transportation systems. In the state-of-the-art transportation system, the communication gateway is automatically configured via a received short message service that does not provide any monitoring capabilities.

An advantage of the method for commissioning a communication gateway with a portable device according to the present invention is that a fitter gets displayed a status feedback of each single step of the commissioning process on the portable device. Therefore, the fitter can follow the commissioning process of the communication gateway and in case of an occurred error, the fitter knows, which step in the commissioning process failed and has to be repeated, or where a possible error has to be searched. That enables an efficient commissioning of a communication gateway as well as error detection.

Furthermore, it is advantageous that the end-to-end connectivity can be automated tested after proper configuration of the communication gateway. The portable device maybe providing data or packages that can be transmitted via the communication gateway for verifying the delay, jitter, crosstalk or bandwidth of the communication gateway.

In addition, the present invention is beneficially especially if an error occurs. The portable device used to commission the communication gateway and following the commissioning process may be provided instructions and hints for every single step in the commission process and also for known problems and occurred errors. This enables a more efficient analysis of occurred errors and error detection and solution process.

Hence, the present invention combines the mechanism of commissioning a communication gateway in a transportation system with monitoring and error detecting capabilities of the commissioning process and an error solution support.

According to another embodiment of the present invention, the communication gateway is registered in the server unit. The server unit may be a personal computer or a workstation in a computer network and may include a processing unit, a system memory, and a system bus that couples various system components including the system memory to the processing unit. The server unit may also consist of a plurality of server units connected to each other and defining logical connections in a cloud infrastructure. The server unit may execute a database for storing registration data from the registered communication gateway. The database can comprise a distributed database stored in different server units. The server unit may be connected to the communication gateway wireless via Wi-Fi using a wireless network infrastructure or via a local area network (LAN).

According to another embodiment of the present invention, specific parameter of the communication gateway, for instance, configuration settings and/or the serial number of the communication gateway can be read out and stored in the database of the server unit. This provides information about the used communications gateways in field as well as about its version and configuration settings. This information can be analyzed and the result can be used for ongoing administration and maintenance processes.

According to another preferred embodiment of the present invention, the transportation system comprises an elevator system or an escalator system.

An elevator or lift is a type of vertical transportation that moves people or loads between floors of a building. Current elevator systems comprise a digital panel for communication with the person to be carried or for providing information over the transportation system and/or building that may be in communication with the communication gateway. Furthermore, current elevator systems comprise sensors for collecting data and detecting events and status from the components of the elevator systems. This information can be transferred via the communication connection provided by the communication gateway to further control instances and used for predictive maintenance.

An escalator system is a type of vertical transportation system in the form of a moving staircase which carries people between floors of a building. Current escalator systems are also in communication with a communication gateway for providing information that can be used in further processes.

According to another embodiment of the present invention, the transportation system comprises a moving walkway. A moving walkway is used for transportation of human-being on the same floor over greater distance.

According to another preferred embodiment of the present invention, the portable device comprises a personal digital assistant (PDA). A PDA is a variety of a mobile device that functions as a personal information manager. The PDA has the ability to connect to the world wide web (Internet). Therefore, the PDA can access the Internet, intranets or extranets via Wi-Fi or Wireless Wide Area Networks (W-Lan). This has the advantage that a PDA can be connected wireless to the communication gateway. In addition, the PDA has an electronic visual display that allows displaying a web browser or different software applications. So, it is possible to run a software application for commissioning the communication gateway in a transportation system and monitoring the process.

According to another preferred embodiment of the present invention, the portable device comprises a laptop. A laptop or notebook is a form of a personal computer (PC) that can be assigned to the group of mobile devices due to their size and weight. A laptop provides different connection interfaces, such as Wi-Fi, Bluetooth, Bluetooth low energy for connecting to the communication gateway. This has the advantage that a laptop can be connected wireless to the communication gateway. Moreover, the laptop provides an operation system that can execute different software programs, which can be used to commissioning the communication gateway in the transportation system and also monitoring the commissioning process.

According to another preferred embodiment of the present invention, the portable device comprises a smartphone. A smartphone is a type of mobile phone and of multi-purpose mobile computing device. The smartphone provides strong hardware capabilities and an extensive mobile operation system, which facilitate wide software, internet and multimedia functionality, alongside core phone functions, e.g., voice calls and text messaging. The smartphone supports different wireless communication protocols such as Bluetooth, Wi-Fi, and infrared. Further, the smartphone provides a screen and browser as well as software applications that can be used to commission the communication gateway in the transportation system and also monitoring the commissioning process.

According to another preferred embodiment of the present invention, the portable device comprises a tablet. A tablet is a mobile device including a touch screen. The tablet supports different wireless communication protocols such as Bluetooth, Wi-Fi, and in specific embodiments also mobile communications standards, e.g., UMTS and LTE. Moreover, the tablet provides an operation system that can execute different software applications, which can be used to commissioning the communication gateway in the transportation system and also monitoring the commissioning process.

According to another preferred embodiment of the present invention, the communication connection is established by a Wi-Fi connection. Wi-Fi is a technology for radio wireless local area networking of devices based on the IEEE 802.11 standards. A Wi-Fi connection enables a wireless connection of a device to the communication gateway with high bandwidth from 72 to 9608 Mbit/s depending on the version (Wi-Fi4, Wi-Fi5, Wi-Fi5) of the used standard. Therefore, data can be transferred from the portable device to the communication gateway.

According to another preferred embodiment of the present invention, the communication connection is established by a Bluetooth connection. Bluetooth connection is a wireless technology standard for exchanging data between the communication gateway and the portable device over a short distance using short-wavelength UHF radio waves from 2.400 to 2.485 GHz. Therefore, data can be transferred from the portable device to the communication gateway and the commissioning process can be monitored.

According to another preferred embodiment of the present invention, the communication connection is established by an infrared connection. An infrared connection provides a wireless data transfer for a maximum range over the last one meter using the point-and-shoot principle. Infrared connections can be provided by portable devices such as mobile phones and laptops. The infrared communication provides a physical secure data transfer in a line-of-sight and has a very low bit error rate that makes it very efficient. Therefore, data can be transferred from the portable device to the communication gateway and the commissioning process can be monitored.

According to another preferred embodiment of the present invention, the communication connection is established by a Bluetooth low energy (BLE) connection. Bluetooth Low Energy, is a wireless personal area network technology which can be used to connect mobile devices in an environment of about 10 meters. Bluetooth Low Energy has a significantly lower power consumption and lower costs with a similar communication range. Therefore, data can be transferred from the portable device to the communication gateway and the commissioning process can be monitored.

According to another preferred embodiment of the present invention, the communication connection is established by a Near field communication (NFC) connection. Near field communication is an international communication standard on the basis of RFID-Technology to establish a contactless communication by bringing a portable device such as a smartphone within a range of 4 cm to another device. The near field communication provides a bandwidth of 424 Kbit/s. Therefore, data can be transferred from the portable device to the communication gateway and the commissioning process can be monitored.

According to another preferred embodiment of the present invention, the configuration data comprise a gateway identifier identifying a logical group of elevator systems or escalator systems. The gateway identifier is maybe elevator systems or escalator systems specific, so that a particular elevator system or escalator system or a group of elevator systems or a group of escalator systems can be identified. Accordingly, the correct software, respectively the correct software version that is required for the communication between the communication gateway and the transportation system can be selected and in a further step downloaded and installed on the communication gateway.

According to another preferred embodiment of the present invention, the established communication connection between the communication gateway and the server unit is a secured communication connection established with secure communication certificates provided by the server unit. The secure communication certificate may be an electronic document provided by the server unit to the communication gateway that is used to prove the ownership of a public key. The public key may be used for symmetric or asymmetric key algorithms. The secure communication certificate may include information about the key, information about the identity of the key owner, and the digital signature of an entity that has verified the certificate's content. If the signature is valid, then it can use that key to communicate securely with the certificate's subject. Thus, a secured connection to the server unit for the automatic software deployment can be established.

According to another preferred embodiment of the present invention, the method further comprises the step of:
Triggering an end-to-end connectivity test by the portable device for verifying the connectivity between the communication gateway and the transportation system after commissioning the communication gateway in the transportation system. In this way, the established communication connection between the communication gateway and the server system as well as the transportation system is verified for function and security.

According to another preferred embodiment of the present invention, the established communication connection from the communication gateway to the server unit is further established to update communication gateway software. In this way, the software, for instance, the firmware of the communication gateway can be updated in a simple way if a new version of the firmware is available. This is important if, for instance, a new communication standard is used by devices that want to connect to the communication gateway. The new software provided by the server unit may be downloaded to the communication gateway by the communication connection established by the portable device.

According to another preferred embodiment of the present invention, the method further comprises the step of:
Establishing a further communication connection from the communication gateway to a transportation system control unit of the transportation system. The transportation system control unit is, for instance, a computer system being in communication with the transportation system that controls the functionalities of the transportation system. The transportation system control unit can be connected by a Wi-Fi connection to the transportation system. In a further embodiment, the transportation system control unit can be connected by a LAN connection to the transportation system.

According to another preferred embodiment of the present invention, the further communication connection from the communication gateway to the transportation control unit is established through the communication gateway to the transportation system control unit. In this way, for instance, the operation system of the transportation system control unit or the software for administration and maintenance of the transportation control unit can be downloaded and installed as well as updated if newer versions of the software are available.

According to another preferred embodiment of the present invention, the further communication connection from the communication gateway to the transportation system control unit is established to download or update transportation system control unit features through the communication gateway to the transportation system control unit, wherein the transportation system control unit feature comprises transportation system control unit data. In this way, new transportation system control unit data can be provided by the server unit and downloaded to the transportation system control unit for installation or update purposes.

According to another preferred embodiment of the present invention, the further communication connection from the communication gateway to the transportation system control unit is established to download or update transportation system control unit features through the communication gateway to the transportation system control unit, wherein the transportation system control unit feature comprises transportation system control unit options. In this way, new transportation system control unit options can be provided by the server unit and downloaded to the transportation system control unit for installation or update purposes.

According to another preferred embodiment of the present invention, the further communication connection from the communication gateway to the transportation system control unit is established to download or update transportation system control unit features through the communication gateway to the transportation system control unit, wherein the transportation system control unit feature comprises transportation system control unit parameters. In this way, new transportation system control unit parameters can be provided by the server unit and downloaded to the transportation system control unit for installation or update purposes.

In a second aspect, the invention refers to a system for commissioning a communication gateway with a portable device in a transportation system according to claim 11.

The system comprising:
a portable device configured to establish a first communication connection to the communication gateway of the transportation system and further configured to transmit configuration data to the communication gateway of the transportation system using the established communication connection, and
a server unit configured to deploy communication gateway software according to the transmitted configuration data to the communication gateway for commissioning the communication gateway in the transportation system by using a second communication connection established, using the configuration data, between the communication gateway and a server unit.

According to a preferred embodiment of the second aspect of the present invention, the system further comprises the transportation system control unit, which is configured to provide and maintain transportation system control unit features of the transportation system.

In a third aspect, the invention refers to a communication gateway of a transportation system accrding to claim 13. The communication gateway comprises:
at least one communication connection interface configured to establish a first communication connection to a portable device for receiving configuration data from the portable device;
at least one further communication connection interface configured to establish a second communication connection to a server unit for initiating a communication gateway software deployment from the server unit according to the transmitted configuration data, and at least one central processing unit for executing the deployed communication gateway software for commissioning said communication gateway in the transportation system.

According to a preferred embodiment of the third aspect of the present invention, the communication gateway further comprises a memory unit. The memory unit comprises, for instance, a hard disk drive (HDD), a random-access memory (RAM), a flash memory and/or an external memory device that is in communication with the communication gateway for storing the deployed communication gateway software.

In a fourth aspect, the invention refers to a computer program which may be part of a computer program product according to claim 14. The computer program is adapted to execute the method for commissioning a communication gateway as mentioned above. The computer program may be provided as signal via download or may be stored into a memory unit of a portable device having computer-readable code embodied therein for causing a portable device to execute instruction according to the methods mentioned above. The realization of the invention by a computer program product has the advantage that already existing portable devices can be easily adopted by software updates in order to work as proposed by the invention.

The properties, features and advantages of this invention described above, as well as the manner they are achieved, become clearer and more understandable in the light of the following description and embodiments, which will be described in more detail in the context of the drawings. The following description does not limit the invention of the contained embodiments. The same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### Brief description of the drawings

Fig. 1 is a schematic drawing of a system for commissioning a communication gateway according to an embodiment of the present invention.
Fig. 2 is a schematic drawing of a system for commissioning a communication gateway according to a further embodiment of the present invention.
Fig. 3 is a flow chart depicting steps of a method for commissioning a communication gateway according to an embodiment of the present invention.
Fig. 4 is a block diagram representing elements of a communication gateway according to an embodiment of the present invention.
Fig. 5 is a schematic drawing showing the communication connection between the components of a system for commissioning a communication gateway according to an embodiment of the present invention.

### Detailed description of the preferred embodiments

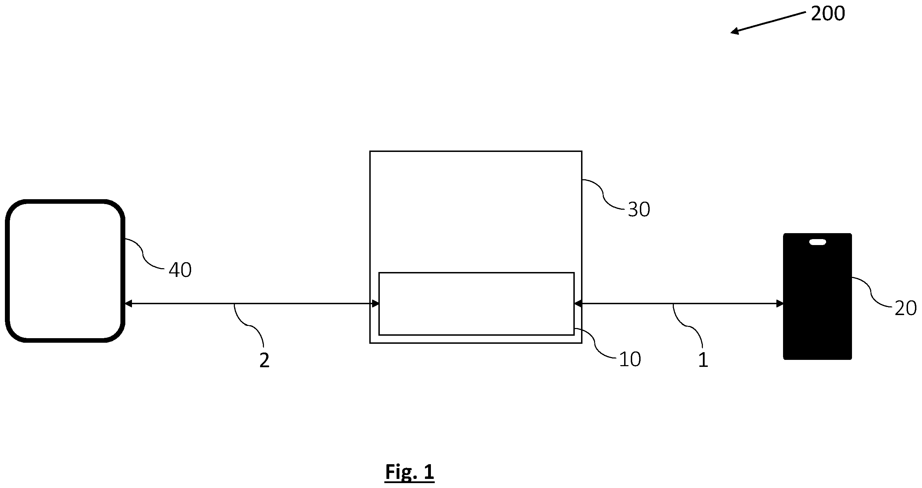

Fig. 1 is a schematic drawing of a system 200 for commissioning a communication gateway 10 according to an embodiment of the present invention. In the illustrated exemplary embodiment of the system 200 a transportation system 30, e.g. an elevator system or an escalator system for transportation human-beings and/or loads may comprise a communication gateway 10.

A fitter, e.g., an expert in installation of network technology receives data for installation and commissioning the communication gateway 10 via a portable device 20, e.g. a Smartphone. The data can also be provided to another portable device 20 that can be used to display the data and to establish a first communication connection 1 to the communication gateway 10 of the transportation system 30. The data for installation and commissioning of the communication gateway 10 comprises, for instance, the site location, e.g., GPS coordinates for the installation of the communication gateway 10. The data for installation and commissioning of the communication gateway 10 further comprises a job description that describes the tasks that have to be fulfilled by the fitter, for instance, to install and commission the communication gateway 10. The data further comprise the list of materials needed and instruction and manuals describing the installation and commissioning process of the communication gateway 10 in the transportation system. The data for installation and commissioning of the communication gateway 10 further comprises configuration data. In an embodiment, the configuration data comprise a gateway identifier that identifies a logical group of elevator systems or escalator systems.

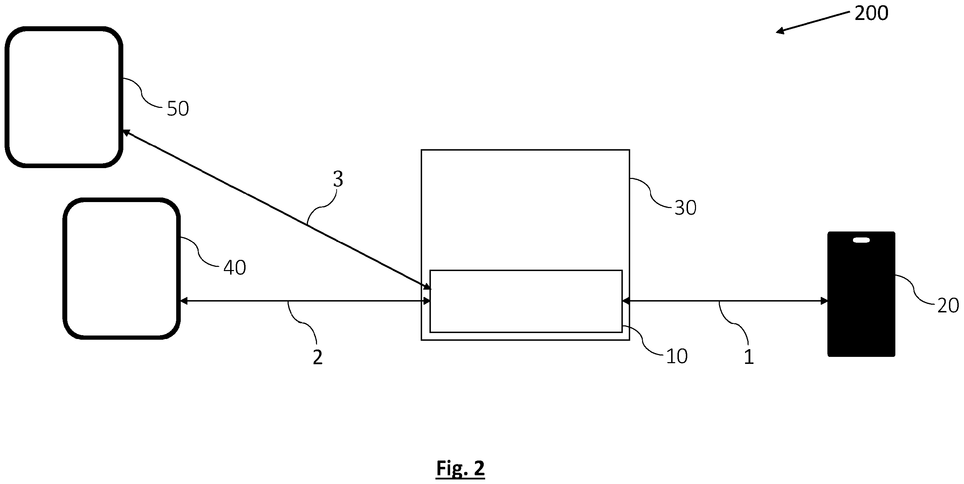

After receiving the data for installation and commissioning of the communication gateway 10, the fitter installs and physically connects the communication gateway 10 to a transportation system control unit 50 (see Fig.2) of the transportation system 30. When the communication gateway 10 is physically connected to the transportation system control unit 50 of the transportation system 30, the fitter powers up the communication gateway 10 of the transportation system 30 for commissioning the communication gateway 10 in the transportation system 30.

In Fig. 1 the communication gateway 10 is in communication with a portable device 20, e.g. a PDA, a Laptop, a Smartphone, and/or a Tablet using a first communication connection 1. The first communication connection 1 between the communication gateway 10 and the portable device 20 may be established by a fitter of the communication gateway using, for instance, a Smartphone. The first communication connection 1 comprises, for instance, a Wi-Fi, Bluetooth, Infrared, Bluetooth low energy, and/or near field communication connection. The communication connection 1 may be used for transmitting configuration data from the portable device 20 to the communication gateway 10 of the transportation system 30. The transfer of the configuration data from the portable device 20 to the communication gateway 10 is triggered by the portable device 20. In a further step, a second communication connection 2 is established by the portable device 20 using the configuration data between the communication gateway 10 of the transportation system 3o and a server unit 40. The second communication connection 2 can be established as a Wi-Fi connection or as a LAN connection. The server unit 40 may be a personal computer or a workstation in a computer network. In a further embodiment, the server unit 40 may also consist of a plurality of server units connected to each other and defining logical connections in a cloud infrastructure. The server unit 40 may execute a database for storing registration data from the communication gateway 40 that can be registered after commissioning in the transportation system 30. The database can comprise a distributed database stored in different server units.

Fig. 2 is a schematic drawing of a system 200 for commissioning a communication gateway 10 according to a further embodiment of the present invention.

In Fig. 2, the embodiment of the system 200 further comprises a transportation system control unit 50. The transportation system control unit 50 is in communication with the communication gateway 10 of the transportation system 30 via a third communication connection 3. The communication connection 3 is established by the portable device 20. In an embodiment, the transportation system control unit 50 is a computer system being in communication with the transportation system 30 over the communication gateway 10 that controls the functionalities of the transportation system 30. The transportation system control unit 50 can be connected by a Wi-Fi connection to the transportation system 30 via the communication gateway 10. In a preferred embodiment, the transportation system control unit 50 may be connected by a LAN connection to the transportation system 30 via the communication gateway 10.

The third communication connection 3 from the communication gateway 10 to the transportation control unit 50 is established through the communication gateway 10 to the transportation system control unit 50. In this way, for instance, the operation system of the transportation system control unit 50 or the software for administration and maintenance of the transportation system control unit 50 can be downloaded and installed as well as updated if newer versions of the operation system and/or software for administration and maintenance are available.

The third communication connection 3 from the communication gateway 10 to the transportation system control unit 50 is established to download or update transportation system control unit features through the communication gateway 10 to the transportation system control unit 50. In an embodiment the transportation system control unit features comprise transportation system control unit data, options, and/or parameters.

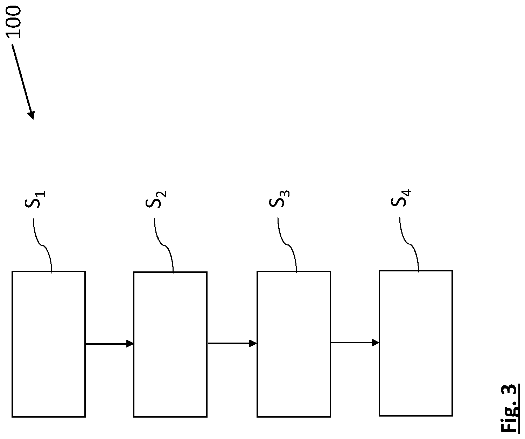

Fig. 3 is a flow chart depicting steps of a method for commissioning a communication gateway according to an embodiment of the present invention.

The method comprises in the illustrated exemplary embodiment several main steps. In a first step S 1, a communication connection 1 from the portable device 20 to the communication gateway 10 of the transportation system 30 is established.

In a further step S2, configuration data from the portable device 20 to the communication gateway 10 of the transportation system 30 using the established communication connection 1 are transmitted.

In a further step S3, a second communication connection 2 from the communication gateway 10 to a server unit 40 using the configuration data is established.

In a further step S4, a communication gateway software deployment from the server unit 40 to the communication gateway 10 is initiated by using the established second communication connection 2 for commissioning the communication gateway 10 in the transportation system 30.

The method steps depicted in Fig. 3 can be executed by the portable device 20. Further, monitoring of the execution is available. For instance, a software application on a portable device 20 may be executed to perform and monitor the method steps.

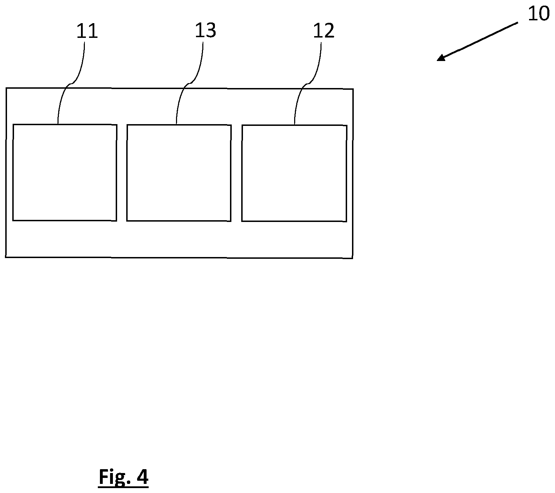

Fig. 4 is a block diagram representing elements of a communication gateway 10 according to an embodiment of the present invention. The communication gateway 10 comprises a communication connection interface 11. The communication gateway 11 is configured to establish a communication connection 1 to a portable device 20 for receiving configuration data from the portable device 20. The communication connection interface 11 provides at least one interface to connect to at least a Wi-Fi, Bluetooth, Infrared, Bluetooth low energy, or Near field communication connection.

The communication gateway 10 further comprises a communication connection interface 12. The communication connection interface 12 is configured to establish a second communication connection 2 to a server system 40 for initiating a communication gateway software deployment from the server unit 40. The communication connection interface 12 provides at least one interface to connect to at least a Wi-Fi or LAN connection.

In a further embodiment, the communication gateway 10 comprises a further communication connection interface (not shown) that is configured to establish a communication connection to a transportation system control unit 50. This communication connection is established by the portable device 20. The communication connection can be used to download, change or update transportation system control unit features, such as data, options, and/or parameter.

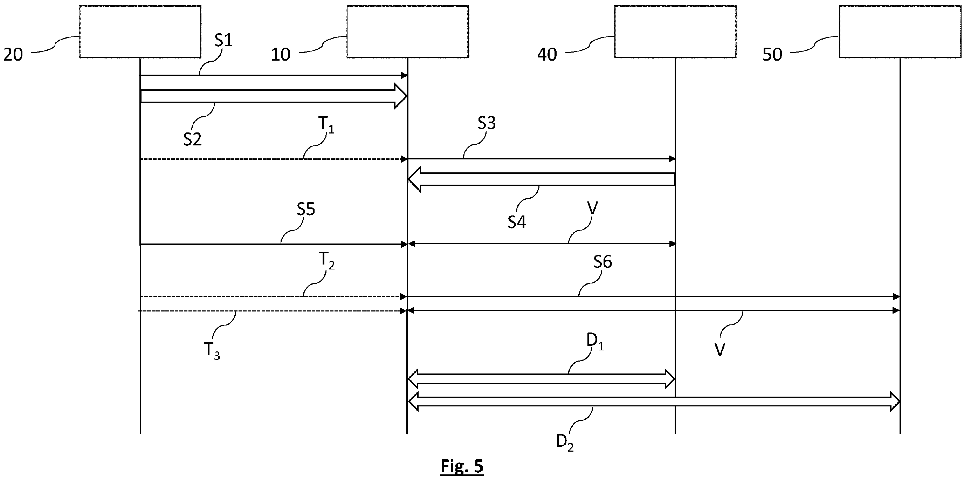

Fig. 5 is a schematic drawing showing the communication connection between the components of a system 200 for commissioning a communication gateway 10 according to an embodiment of the present invention.

A portable device 20, for instance, a Smartphone establishes in a first step S1 a communication connection 1 between the portable device 20 and a communication gateway 10 of a transportation system 30. The communication gateway 10 provides a remote network with connectivity to a host network. The communication connection 1 is established, for instance, via Wi-Fi. The transportation system 30 (not shown) is, for instance, an elevator system or an escalator system.

In a second step S2, a transmitting of configuration data from the mobile device 20 to the communication gateway 10 of the transportation system 30 using the established communication connection 1 is triggered by the portable device 20. The transmitted configuration data comprise a gateway identifier identifying a logical group of elevator systems or escalator systems.

In a third step S3, a second communication connection 2 between the communication gateway 10 to a server unit 40 of the transportation system 30 is established using the transmitted configuration data. The third step S3 is triggered T₁ by the portable device 20. The server unit 40 may be a personal computer or workstation in a computer network. In an embodiment, the server unit 40 may also consist of a plurality of server units connected to each other and defining logical connections in a cloud infrastructure. The server unit 40 may execute a database for storing registration data from the registered communication gateway. The server unit 40 further stores communication gateway software and/or software, such as, firmware software for a transportation system control unit 50 of the transportation system 30. The server unit 40 may be connected to the communication gateway wireless via Wi-Fi using a wireless network infrastructure or via a local area network (LAN).

In a fourth step S4, a communication gateway software deployment from the server unit 40 to the communication gateway 10 using the established second communication connection 2 for commissioning the communication gateway 10 in the transportation system 30 is initiated automatically by the server unit 40. In an embodiment of the present invention, the software deployed has been selected according to the transmitted configuration data.

In an alternative embodiment, the established second communication connection 2 between the communication gateway 10 of the transportation system 30 and the transportation system 30, respectively the server unit 40 can be verified in an end-to-end connectivity test before deploying the communication gateway software. The end-to-end connectivity test is triggered in a further step S5 by the portable device 20 for verifying V the connectivity between the communication gateway 10 and the transportation system 30, respectively the transportation system control unit 50 of the transportation system 30.

In a further step, the portable device 20 can trigger T₂ establishing a third communication connection 3 from the communication gateway 10 to the transportation system control unit 50 of the transportation system 30. In an alternative embodiment, the third communication connection 3 can be verified V in an end-to-end connectivity test triggered T₃ by the portable device 20.

The established second communication connection 2 between the communication gateway 10 and the server unit 40 may be used to deploy new software from the server unit 40 to the communication gateway 10. In a further embodiment, the second communication connection 2 between the communication gateway 10 and the server unit 40 can be used to update existing software of the communication gateway 10. An update-process may be triggered by the server unit 40 after the second communication connection 2 is established automatically or triggered by the portable device 20. The server unit 20 may be verifying the current software version executed by the communication gateway 10 in a configured and random interval.

The established third communication connection 3 between the communication gateway 10 and the communication server control unit 50 may be used for writing or changing as well as updating communication server control unit features. The transfer of communication server control unit features from the server unit 40 to the communication server control unit 50 is forwarded by the communication gateway 10. The communication server control unit features comprise data, options and/or parameters.

While the current invention has been described in relation to its preferred embodiments, it is to be understood that this description is for illustrative purposes only. Accordingly, it is intended that the invention be limited only by the scope of the claims appended hereto.

## Claims

1. A method (100) for commissioning a communication gateway (10) of a transportation system (30) with a portable device (20), the method comprising the steps of:
- Establishing (S 1) a first communication connection (1) from the portable device (20) to the communication gateway (10) of the transportation system (30); **characterised by**
- Transmitting (S2) configuration data from the portable device (20) to the communication gateway (10) of the transportation system (30) using the established first communication connection (1), wherein the configuration data comprise a gateway identifier identifying this transportation system (30);
- Establishing (S3) a second communication connection (2) from the communication gateway (10) to a server unit (40) using the configuration data,
- According to the transmitted configuration data, initiating (S4) a communication gateway software deployment from a server unit (40) by using the established second communication connection (2) for commissioning the communication gateway (10) in the transportation system (30).

2. A method (100) according to claim 1, wherein the transportation system (30) comprises an elevator system and/or an escalator system.

3. A method (100) according to any of the preceding claims, wherein the portable device (20) comprises at least one of the portable devices:
- PDA;
- Laptop;
- Smartphone, and/or
- Tablet.

4. A method (100) according to any of the preceding claims, wherein the communication connection (1) is established by at least one of the communication connections (1):
- Wi-Fi;
- Bluetooth;
- Bluetooth low energy (BLE);
- Infrared and/or
- Near field communication (NFC).

5. A method (100) according to any of the preceding claims, wherein the established second communication connection (2) is a secured communication connection (2) established with secure communication certificates provided by the server unit (40).

6. A method (100) according to any of the preceding claims, wherein the method further comprises the step of:
- Triggering (S5) an end-to-end connectivity test by the portable device (20) for verifying the connectivity between the communication gateway (10) and the transportation system (30) after commission the communication gateway (10) in the transportation system (30).

7. A method (100) according to any of the preceding claims, wherein the established second communication connection (2) from the communication gateway (10) to the server unit (40) is further established to update communication gateway software.

8. A method (100) according to any of the preceding claims, wherein the method further comprises the step of:
- Establishing (S6) a third further communication connection (3) from the communication gateway (10) to a transportation system control unit (50) of the transportation system (30).

9. A method (100) according to claim 8, wherein the third communication connection (3) from the communication gateway (10) to the transportation control unit (50) is established to write or change as well as update the technical features of the transportation system control unit (50) through the communication gateway (10).

10. A method (100) according to claim 8, wherein the second communication connection (2) from the communication gateway (10) to the transportation control unit (50) is established to download or update transportation system control unit features through the communication gateway (10) to the transportation system control unit (50), wherein the transportation system control unit features comprise at least one of the features:
- transportation system control unit data;
- transportation system control unit options, and/or
- transportation system control unit parameters.

11. A system (200) for commissioning a communication gateway (10) of a transportation system (30) with a portable device (20), comprising:
a portable device (20) configured to establish a first communication connection (1) to the communication gateway (10) of the transportation system (30) **characterised by** being further configured to transmit configuration data to the communication gateway (10) of the transportation system (30) using the established first communication connection (1), wherein the configuration data comprise a gateway identifier identifying this transportation system (30), and
a server unit (40) configured to deploy communication gateway software according to the transmitted configuration data to the communication gateway (10) for commissioning the communication gateway (10) in the transportation system (30) by using a second communication connection (2) established, using the configuration data, between the communication gateway (10) and a server unit (40).

12. A system (200) according to claim 11, wherein the system (200) further comprises the transportation system control unit (50), which is configured to maintain transportation system control unit features of the transportation system (30).

13. A communication gateway (10) of a transportation system (30), said communication gateway (10) comprising:
at least one communication connection interface (11) configured to establish a first communication connection (1) to a portable device (20) for receiving configuration data from the portable device (20), wherein the configuration data comprise a gateway identifier identifying this transportation system (10);
at least one further communication connection interface (12) configured to establish a second communication connection (2) to a server unit (40) for initiating a communication gateway software deployment from the server unit (40) according to the transmitted configuration data; and
at least one central processing unit (13) for executing the deployed communication gateway software for commissioning said communication gateway (10) in the transportation system (30).

14. A computer program product (300) with program code for executing a method (100) according to any of the claims 1 to 10, if the computer program is executed on a portable device (20).

## Patentansprüche

1. Verfahren (100) zum Inbetriebnehmen eines Kommunikations-Gateways (10) eines Transportsystems (30) mit einer tragbaren Vorrichtung (20), das Verfahren umfassend die Schritte:
- Herstellen (S1) einer ersten Kommunikationsverbindung (1) von der tragbaren Vorrichtung (20) zu dem Kommunikations-Gateway (10) des Transportsystems (30); **gekennzeichnet durch**
- Übertragen (S2) von Konfigurationsdaten von der tragbaren Vorrichtung (20) an das Kommunikations-Gateway (10) des Transportsystems (30) unter Verwendung der hergestellten ersten Kommunikationsverbindung (1), wobei die Konfigurationsdaten einen Gateway-Identifizierer umfassen, der dieses Transportsystem (30) identifiziert;
- Herstellen (S3) einer zweiten Kommunikationsverbindung (2) von dem Kommunikations-Gateway (10) zu einer Servereinheit (40) unter Verwendung der Konfigurationsdaten,
- gemäß den übertragenen Konfigurationsdaten, Initiieren (S4) einer Kommunikations-Gateway-Software-Bereitstellung von einer Servereinheit (40) durch Verwenden der hergestellten zweiten Kommunikationsverbindung (2) für eine Inbetriebnahme des Kommunikations-Gateways (10) in dem Transportsystem (30).

2. Verfahren (100) nach Anspruch 1, wobei das Transportsystem (30) eine Aufzugsanlage und/oder ein Fahrtreppensystem umfasst.

3. Verfahren (100) nach einem der vorstehenden Ansprüche, wobei die tragbare Vorrichtung (20) mindestens eine der tragbaren Vorrichtungen umfasst:
- PDA;
- Laptop;
- Smartphone, und/oder
- Tablet.

4. Verfahren (100) nach einem der vorstehenden Ansprüche, wobei die Kommunikationsverbindung (1) durch mindestens eine der Kommunikationsverbindungen (1) hergestellt wird:
- Wi-Fi;
- Bluetooth;
- Bluetooth Low Energy (BLE);
- Infrarot und/oder
- Nahfeldkommunikation (NFC).

5. Verfahren (100) nach einem der vorstehenden Ansprüche, wobei die hergestellte zweite Kommunikationsverbindung (2) eine gesicherte Kommunikationsverbindung (2) ist, die mit sicheren Kommunikationszertifikaten hergestellt wird, die durch die Servereinheit (40) zur Verfügung gestellt werden.

6. Verfahren (100) nach einem der vorstehenden Ansprüche, wobei das Verfahren ferner den Schritt umfasst:
- Auslösen (S5) eines End-to-End-Konnektivitätstests durch die tragbare Vorrichtung (20) zum Verifizieren der Konnektivität zwischen dem Kommunikations-Gateway (10) und dem Transportsystem (30) nach der Inbetriebnahme des Kommunikations-Gateways (10) in dem Transportsystem (30).

7. Verfahren (100) nach einem der vorstehenden Ansprüche, wobei die hergestellte zweite Kommunikationsverbindung (2) von dem Kommunikations-Gateway (10) zu der Servereinheit (40) ferner hergestellt wird, um die Kommunikations-Gateway-Software zu aktualisieren.

8. Verfahren (100) nach einem der vorstehenden Ansprüche, wobei das Verfahren ferner den Schritt umfasst:
- Herstellen (S6) einer dritten weiteren Kommunikationsverbindung (3) von dem Kommunikations-Gateway (10) zu einer Transportsystemsteuereinheit (50) des Transportsystems (30).

9. Verfahren (100) nach Anspruch 8, wobei die dritte Kommunikationsverbindung (3) vom dem Kommunikations-Gateway (10) zu der Transportsteuereinheit (50) hergestellt wird, um die technischen Merkmale der Transportsystemsteuereinheit (50) durch das Kommunikations-Gateway (10) zu schreiben oder zu ändern sowie zu aktualisieren.

10. Verfahren (100) nach Anspruch 8, wobei die zweite Kommunikationsverbindung (2) von dem Kommunikations-Gateway (10) zu der Transportsteuereinheit (50) hergestellt wird, um die Transportsystemsteuerungseinheitsmerkmale durch das Kommunikations-Gateway (10) auf die Transportsystemsteuereinheit (50) herunterzuladen oder zu aktualisieren, wobei die Transportsystemsteuereinheitsmerkmale mindestens eines der Merkmale umfassen:
- Transportsystemsteuereinheitsdaten;
- Transportystemsteuereinheitsoptionen, und/oder
- Transportsystemsteuereinheitsparameter.

11. System (200) für die Inbetriebnahme eines Kommunikations-Gateways (10) eines Transportsystems (30) mit einer tragbaren Vorrichtung (20), umfassend:
eine tragbare Vorrichtung (20), die ausgestaltet ist, um eine erste Kommunikationsverbindung (1) zu dem Kommunikations-Gateway (10) des Transportsystems (30) herzustellen, **dadurch gekennzeichnet, dass** sie ferner ausgestaltet ist, um Konfigurationsdaten an das Kommunikations-Gateway (10) des Transportsystems (30) unter Verwendung der hergestellten ersten Kommunikationsverbindung (1) zu übertragen, wobei die Konfigurationsdaten einen Gateway-Identifizierer umfassen, der dieses Transportsystem (30) identifiziert, und
eine Servereinheit (40), die ausgestaltet ist, um die Kommunikations-Gateway-Software gemäß den übertragenen Konfigurationsdaten an das Kommunikations-Gateway (10) für die Inbetriebnahme des Kommunikations-Gateways (10) in dem Transportsystem (30) durch Verwenden einer zweiten Kommunikationsverbindung (2), die unter Verwendung der Konfigurationsdaten zwischen dem Kommunikations-Gateway (10) und einer Servereinheit (40) hergestellt wird, bereitzustellen.

12. System (200) nach Anspruch 11, wobei das System (200) ferner die Transportsystemsteuereinheit (50) umfasst, die ausgestaltet ist, um die Transportsystemsteuereinheitsmerkmale des Transportsystems (30) zu erhalten.

13. Kommunikationsgateway (10) eines Transportsystems (30), das Kommunikations-Gateway (10) umfassend:
mindestens eine Kommunikationsverbindungsschnittstelle (11), die ausgestaltet ist, um eine erste Kommunikationsverbindung (1) zu einer tragbaren Vorrichtung (20) zum Empfangen von Konfigurationsdaten von der tragbaren Vorrichtung (20) herzustellen, wobei die Konfigurationsdaten einen Gateway-Identifizierer umfassen, der dieses Transportsystem (10) identifiziert;
mindestens eine weitere Kommunikationsverbindungsschnittstelle (12), die ausgestaltet ist, um eine zweite Kommunikationsverbindung (2) zu einer Servereinheit (40) zum Initiieren einer Kommunikations-Gateway-Software-Bereitstellung von der Servereinheit (40) gemäß den übertragenen Konfigurationsdaten herzustellen; und
mindestens eine zentrale Verarbeitungseinheit (13) zum Ausführen der Kommunikations-Gateway-Software für die Inbetriebnahme des Kommunikations-Gateways (10) in dem Transportsystem (30).

14. Computerprogrammprodukt (300) mit einem Programmcode zum Ausführen eines Verfahrens (100) nach einem der Ansprüche 1 bis 10, wenn das Computerprogramm auf einer tragbaren Vorrichtung (20) ausgeführt wird.

## Revendications

1. Procédé (100) pour la mise en service d'une passerelle de communication (10) d'un système de transport (30) avec un dispositif portable (20), le procédé comprenant les étapes consistant à :
- Établir (S1) une première connexion de communication (1) depuis le dispositif portable (20) vers la passerelle de communication (10) du système de transport (30) ; **caractérisé par**
- Transmettre (S2) des données de configuration depuis le dispositif portable (20) vers la passerelle de communication (10) du système de transport (30) au moyen de la première connexion de communication établie (1), dans lequel les données de configuration comprennent un identificateur de passerelle identifiant ce système de transport (30) ;
- Établir (S3) une deuxième connexion de communication (2) depuis la passerelle de communication (10) vers une unité de serveur (40) au moyen des données de configuration,
- Selon les données de configuration transmises, initier (S4) un déploiement de logiciel de passerelle de communication depuis une unité de serveur (40) par utilisation de la deuxième connexion de communication établie (2) pour la mise en service de la passerelle de communication (10) dans le système de transport (30).

2. Procédé (100) selon la revendication 1, dans lequel le système de transport (30) comprend un système d'ascenseur et/ou un système d'escalier mécanique.

3. Procédé (100) selon l'une quelconque des revendications précédentes, dans lequel le dispositif portable (20) comprend au moins l'un des dispositifs portables :
- PDA;
- Ordinateur portable ;
- Smartphone, et/ou
- Tablette.

4. Procédé (100) selon l'une quelconque des revendications précédentes, dans lequel la connexion de communication (1) est établie par au moins l'une des connexions de communication (1) :
- Wi-Fi ;
- Bluetooth ;
- Bluetooth basse énergie (BLE) ;
- Infrarouge et/ou
- Communication en champ proche (NFC).

5. Procédé (100) selon l'une quelconque des revendications précédentes, dans lequel la deuxième connexion de communication établie (2) est une connexion de communication sécurisée (2) établie avec des certificats de communication sécurisés fournis par l'unité de serveur (40).

6. Procédé (100) selon l'une quelconque des revendications précédentes, dans lequel le procédé comprend en outre l'étape consistant à :
- Déclencher (S5) un test de connectivité de bout en bout par le dispositif portable (20) pour la vérification de la connectivité entre la passerelle de communication (10) et le système de transport (30) après une mise en service de la passerelle de communication (10) dans le système de transport (30).

7. Procédé (100) selon l'une quelconque des revendications précédentes, dans lequel la deuxième connexion de communication établie (2) depuis la passerelle de communication (10) vers l'unité de serveur (40) est en outre établie pour mettre à jour un logiciel de passerelle de communication.

8. Procédé (100) selon l'une quelconque des revendications précédentes, dans lequel le procédé comprend en outre l'étape consistant à :
- Établir (S6) une troisième connexion de communication supplémentaire (3) depuis la passerelle de communication (10) vers une unité de commande de système de transport (50) du système de transport (30).

9. Procédé (100) selon la revendication 8, dans lequel la troisième connexion de communication (3) depuis la passerelle de communication (10) vers l'unité de commande de transport (50) est établie pour écrire ou changer ainsi que mettre à jour les caractéristiques techniques de l'unité de commande de système de transport (50) à travers la passerelle de communication (10).

10. Procédé (100) selon la revendication 8, dans lequel la deuxième connexion de communication (2) depuis la passerelle de communication (10) vers l'unité de commande de transport (50) est établie pour télécharger ou mettre à jour des caractéristiques d'unité de commande de système de transport à travers la passerelle de communication (10) vers l'unité de commande de système de transport (50), dans lequel les caractéristiques d'unité de commande de système de transport comprennent au moins l'une des caractéristiques :
- données d'unité de commande de système de transport ;
- options d'unité de commande de système de transport, et/ou
- paramètres d'unité de commande de système de transport.

11. Système (200) pour la mise en service d'une passerelle de communication (10) d'un système de transport (30) avec un dispositif portable (20), comprenant :
un dispositif portable (20) configuré pour établir une première connexion de communication (1) vers la passerelle de communication (10) du système de transport (30) **caractérisé par** le fait d'être en outre configuré pour transmettre des données de configuration à la passerelle de communication (10) du système de transport (30) au moyen de la première connexion de communication établie (1), dans lequel les données de configuration comprennent un identificateur de passerelle identifiant ce système de transport (30), et
une unité de serveur (40) configurée pour déployer un logiciel de passerelle de communication selon les données de configuration transmises à la passerelle de communication (10) pour la mise en service de la passerelle de communication (10) dans le système de transport (30) par utilisation d'une deuxième connexion de communication (2) établie, au moyen des données de configuration, entre la passerelle de communication (10) et une unité de serveur (40).

12. Système (200) selon la revendication 11, dans lequel le système (200) comprend en outre l'unité de commande de système de transport (50), qui est configurée pour maintenir des caractéristiques d'unité de commande de système de transport du système de transport (30).

13. Passerelle de communication (10) d'un système de transport (30), ladite passerelle de communication (10) comprenant :
au moins une interface de connexion de communication (11) configurée pour établir une première connexion de communication (1) vers un dispositif portable (20) pour la réception de données de configuration depuis le dispositif portable (20), dans laquelle les données de configuration comprennent un identificateur de passerelle identifiant ce système de transport (10) ;
au moins une interface de connexion de communication supplémentaire (12) configurée pour établir une deuxième connexion de communication (2) vers une unité de serveur (40) pour l'initiation d'un déploiement de logiciel de passerelle de communication depuis l'unité de serveur (40) selon les données de configuration transmises ; et
au moins une unité de traitement centrale (13) pour l'exécution du logiciel de passerelle de communication déployé pour la mise en service de ladite passerelle de communication (10) dans le système de transport (30).

14. Produit de programme informatique (300) avec un code de programme pour l'exécution d'un procédé (100) selon l'une quelconque des revendications 1 à 10, si le programme informatique est exécuté sur un dispositif portable (20).
